# EUROPEAN PATENT APPLICATION

(11) **EP 4 835 113 A1**
(43) Date of publication of application: **04.11.2026**
(21) Application number: 24912927.1
(22) Date of filing: 25.12.2024
(51) Int. Cl.: C22C 29/08, B22F 5/12, B23P 15/28, B23P 15/40, C22C 1/051, C23C 24/08

(54) **COATING LAYER OF HARD ALLOY AND MACHINE ARTICLE HAVING COATING LAYER OF HARD ALLOY ON SUBSTRATE SURFACE**

(30) Priority: 28.12.2023 JP 2023222105
(71) Applicant: Mitsubishi Materials Hardmetal Corporation, Gifu 503-2301 (JP)
(72) Inventor: YAMAMOTO Motomichi, Higashi-Hiroshima City, Hiroshima 7398511 (JP); MARUMOTO Keita, Higashi-Hiroshima City, Hiroshima 7398511 (JP); ICHIKAWA Hiroshi, Anpachi-gun, Gifu 503-2301 (JP); ABE Takashi, Anpachi-gun, Gifu 503-2301 (JP)
(74) Representative: Gille Hrabal Partnerschaftsgesellschaft mbB Patentanwälte
(86) International application number: PCT/JP2024/045965
(87) International publication number: WO 2025/143041

(57) **Abstract**

Provided are a coating layer comprising hard phases and binder phases, wherein the coating layer further includes abnormal phases in an area fraction of 10.0% or less and voids in an area fraction of 2.0% or less. A mechanical component includes a coating layer of a cemented carbide on its surface. Examples of the mechanical component include a cut-off tool, a cutting tool, and a coating tool.

## Description

### Technical Field

The present invention relates to a coating layer of a cemented carbide and a mechanical component including the coating layer of the cemented carbide on a surface of a substrate. This application claims priority based on Japanese Patent Application No. 2023-222105, filed on December 28, 2023. The entire contents of the Japanese patent application are incorporated herein by reference.

### Background Art

Powder metallurgy is a method of producing mechanical components with a cemented carbide. This powder metallurgy process involves compaction of cemented carbide powder into a shape with machining allowances relative to the geometry of a target mechanical component, sintering of the green compact, machining the sintered compact, for example, by grinding or electrical discharge machining into a mechanical component with a desired shape.

This method essentially requires a cutting allowance, and thus produces portions that are not used as the intended mechanical component, to varying degrees, resulting in a waste of the expensive raw material powder containing W, Co, and Ni. In addition, the cemented carbide is used in portions that do not actually require the use of cemented carbide, resulting in excess use of expensive raw material powder.

In light of this situation, several proposals have been made.

For example, PTL 1 discloses a method of manufacturing a sintered compact with a complicated shape by additive manufacturing. in can produce a sintered compact very close to a desired shape, and thus can reduce the amount of raw powder to be used.

PTL 2 discloses a cutting tool made of a cemented carbide only in required portions, and an intermediate layer between a composite mechanical component including a cemented carbide portion made of WC-Co based cemented carbide and a mechanical component containing 50 mass% or more Ni and Co in total. The composite mechanical component exhibits excellent high-temperature strength and suppressed cracking and peeling.

### Citation List

### Patent Literature

PTL 1: Japanese Unexamined Patent Publication No. 2018-83959
PTL 2: WO2019/069701

### Summary of Invention

### Technical Problem

An object of the present invention is to provide a coating layer of a cemented carbide and a mechanical component provided with the coating layer. The resulting coating layer has a flawless alloy microstructure and exhibits high durability. According to the method, a mechanical component provided with a coating layer can be produced without excess use of W, Co, and Ni powders.

### Solution to Problem

A coating layer of a cemented carbide according to an embodiment of the present invention includes hard phases and binder phases,
wherein the coating layer of the cemented carbide further includes abnormal phases in an area fraction of 10.0% or less, and voids in an area fraction of 2.0% or less.

The coating layer of the cemented carbide may satisfy at least one of the following conditions (1) and (2):
(1) The Vickers hardness is 1200 HV or higher.
(2) The hard phases have an average equivalent circle diameter (D50) in a range of 0.3 to 10.0 µm.

A mechanical component according to embodiments of the present invention includes a substrate having a surface, and the coating layer of the cemented carbide on the surface. Examples include cut-off tools, cutting tools, coating devices, and mold rolls.

### Advantageous Effects of Invention

The coating layer of the cemented carbide includes a flawless alloy microstructure (defined later) due to low area fractions of abnormal phases and voids, and thus enhance the durability of mechanical components. The mechanical component, which has the coating layer of the cemented carbide only on its surfaces (e.g., an area requiring higher hardness or mechanical strength in the mechanical component), can be produced with reduced amounts of expensive raw material powders containing W, Co, and Ni.

### Brief Description of Drawing

Fig. 1 is a schematic diagram of an exemplary apparatus for manufacturing a mechanical component according to an embodiment of the present invention.
Fig. 2 is a schematic diagram of an exemplary die cutter, which is a mechanical component (cut-off tool) with a surface coating layer formed according to Example.

### Description of Embodiments

The present inventors have examined the disclosures of PTLs 1 and 2 to find a method of enhancing the durability of cutting edges (edge-shaping portions) in tools such as cut-off tools, cutting tools, coating devices, and mold rolls with formed grooves, while minimizing the use of expensive raw powder materials containing W, Co, and Ni, and confirmed the following points:

### (1) Regarding additive manufacturing described in PTL 1

The granulated powder contains numerous internal voids, and large voids also exist between the granules. Since no pressure forming such as pressing is performed, voids or pores remain within the laser-heated sintered article. One approach to suppress voids in the sintered article is to increase the laser output to melt the granulated powder at a high temperature. However, melting the granulated powder of cemented carbide containing both a hard phase and a binder phase at high temperatures causes the high-melting-point hard phase to melt, leading to the formation of brittle phases or grain-grown hard phases. This prevents creation of a flawless alloy microstructure (defined later), resulting in reduced hardness and strength of the fabricated article. Furthermore, the additive manufacturing makes it difficult to produce large mechanical components.

### (2) Regarding cutting tools including cemented carbides only in necessary parts as described in PTL 2

PTL 2 states that formation of an intermediate layer composed of a mixture of a cemented carbide and the material of the mechanical component reduces cracking and delamination. However, the cemented carbide, consisting of a high-melting-point hard phase and a low-melting-point binder phase, is melted by direct irradiation with a heat source; hence, the intermediate layer does not form a flawless alloy microstructure. Furthermore, the mechanical component is limited to Ni, Co, or an alloy containing 50 mass% or more in total Ni or Co. This makes it difficult to manufacture a cemented carbide composite structure in a steel mechanical component.

The inventors have examined the following known techniques and arrived at the following understanding.

### (3) Wire Directed Energy Deposition (DED)

Wire DED involves feeding wire-shaped filler material, melting it with a laser to coat mechanical components, and shaping the filler material into a desired form. However, it is difficult to control the temperature of the filler material with laser heating. If the filler material is a cemented carbide, the hard phase also melts. This results in the formation of brittle phases or abnormally grown hard phases within the coating layer, leading to a reduction in the hardness and strength of the coated mechanical component.

### (4) Build-up Welding

Build-up welding involves melting both the surface of the mechanical component and the tip of the wire-shaped filler material with a heat source to form a molten pool on the surface of the mechanical component. The filler material is then fed into the molten pool from a direction different from the heat source to build up the surface of the mechanical component. However, in this build-up welding process, use of a cemented carbide as the filler material precludes the formation of flawless alloy microstructure in the coating layer.

The inventors have conducted further investigations based on this understanding. As a result, the inventors have found reached the following finding: The filler material, which is a cemented carbide, should be in rod form rather than wire form; the filler material is preliminarily heated to a temperature sufficient to soften without melting by preheating means, such as resistance heating device; The mechanical component is then transferred into a molten pool created with a laser, electron beam, plasma, or arc; and then the filler material is heated in the molten pool so as not to melt the hard phase in the cemented carbide filler material, resulting in a coating layer with a flawless alloy microstructure formed on the mechanical component with the cemented carbide filler material.

The wire form refers to a flexible wire that can be fed from cylinder such as a bobbin, whereas the rod form refers to a wire with high rigidity that is difficult to bend and thus difficult to feed from the cylinder. The rod form may have any cross-section, such as circular, elliptical, or square.

A coating layer for coating the cemented carbide and a mechanical component including the coating layer of the cemented carbide according to embodiments of the present invention will now be described.

Throughout the specification and the claims, a numerical range expressed as "L to M" (where L and M are both numerical values) is synonymous with "L or more and M or less." This range includes both the upper limit (M) and the lower limit (L). If only the upper limit (M) is given a unit, the unit for the upper limit (M) is the same as that for the lower limit (L).

The term "cemented carbide" as used in the claims and specification refers to an alloy (cemented carbide alloy) containing a base alloy selected from W carbide and carbide, nitride, or carbonitride of an element belonging to Groups 4 to 6 of the periodic table, and further containing iron group elements, such as Co or Ni. The phrase "the coating layer has a normal appearance" means that upon visual inspection of the coating layer finds none of the following defects: cracks, overlaps, humping, undercuts, or serpentine patterns.

The term "flawless alloy microstructure" as used herein refers to a microstructure that does not contain (or contains below a predetermined proportion) brittle phases, low-carbon phases, free carbon phases, and defects in coarse hard phases (collectively referred to as abnormal phases), as well as voids (without distinguishing them from nests).

### 1. Coating layer of cemented carbide

The coating layer of the cemented carbide will now be described.

### (1) Microstructure

The coating layer of a cemented carbide consists of hard phases, binder phases, optionally present secondary hard phases, and anomalous phases. Voids also exist in the coating layer of the cemented carbide.

### 1) Hard phase

The hard phase may have any composition that can be used as the hard phase in a cemented carbide. Examples include tungsten carbide (which may contain carbides other than WC), composite nitrides of tungsten and titanium, and nitride ceramics (for example, TiN, TaN, and NbN).

The hard phase may have any average diameter without particular restrictions. More preferably, the equivalent circle diameter D50 (50% cumulative diameter: median diameter) is 0.3 to 10.0 µm. Within the average diameter (D50) of the hard phase satisfying this range, the coating layer exhibits superior hardness and toughness. An average diameter exceeding 10 µm leads to formation of larger binder phases, resulting in insufficient resistance to plastic deformation and increased susceptibility to wear. For example, a cut-off tool including the hard phase of the cemented carbide in a coating layer may exhibit premature deterioration of cut-off performance. An average diameter less than 0.3 µm leads to insufficient toughness against loads at a cut-off operation, potentially causing premature breakage of the cut-off tool. The average diameter of the hard phase is preferably 0.5 to 3.5 µm, more preferably 0.6 to 1.5 µm.

The cumulative 50% diameter (median diameter) refers to the equivalent circle diameter where the cumulative fraction reaches 50% in plotting the equivalent circle diameter on the horizontal axis and the cumulative fraction of hard phases relative to that equivalent circle diameter on the vertical axis. The number of hard phases on both the larger and smaller sides from this cumulative 50% diameter is equal.

### 2) Binder Phase

The components and composition of the binder phases correspond to those of the hard phase. Examples include phases primarily composed of Co, Ni, and Fe.

The area fractions of the hard phases and the binder phases in the coating layer is preferably such that the hard phases is 50% or more and the binder phases is 40% or less, for the following reasons:
An area fraction less than 50% of the hard phases or an area fraction greater than 40% of the binder phases leads to high toughness and superior fracturing resistance of the coating layer, but insufficient wear resistance, in other words, premature wear; hence, a cut-off tool including a coating layer containing the binder phases cannot maintain cutting performance over the long term.

It is further preferred that the hard phase be 85% or less and the binder phase be 5% or more.

To achieve a preferred Vickers hardness (1200 HV or higher) described later, the preferred relation between the D50 of the hard phases and the area fraction of the binder phases is as follows:
For D50 of the hard phases in the range of 0.3 to 10.0 µm, the area fraction of the binder phases is 5 to 35%;
For D50 of the hard phases in the range of 0.5 to 3.5 µm, the area fraction of the binder phases is 7 to 30%; or
For D50 of the hard phases in the range of 0.6 to 1.5 µm, the area fraction of the binder phases is 9 to 25%.

### 3) Secondary hard phase

Cr, V, and other elements added optionally generate secondary hard phases in the form of carbides. Since the addition of Cr, V, and other elements is optional, the presence of a secondary hard phases is not essential. The secondary hard phases, if present, should occupy preferably 10% or less in area fraction in the coating layer, for the following reasons:
A area fraction of exceeding 10% of the secondary hard phases leads to poor wettability of the secondary hard phases with the binder phase, which mainly consists of Co and Ni. As a result, the hard phases and secondary hard phases readily agglomerate, potentially reducing the flexural strength and toughness of the coating layer. It is even more preferable for the area fraction of the secondary hard phases to be 5% or less (it may even be 0%).

### 4) Abnormal phase

The area fraction of the abnormal phases in the coating layer should preferably be 10% or less, for the following reasons: An area fraction exceeding 10% of the abnormal phases leads to an increase in the probability of exposure of the abnormal phases at the sharp cutting edge of a mechanical component after finish polishing. Specifically, the cutting edge with the exposed abnormal phase lack the required wear resistance and toughness. Such an edge cannot maintain cutting performance over the long term.

Since the abnormal phases are preferably not present, the lower limit for the area fraction of abnormal phases is 0%.

Phases that do not correspond to either the hard phase, the binder phase, or the secondary hard phase are regarded as abnormal phases. The abnormal phases, such as brittle phases, low-carbon phases, and free carbon phases, as well as defects in coarse hard phases will now be described.

### 4-1) Brittle phase

The brittle phase consists of at least one selected from the group consisting of W₂C, M₆C, such as W₃Co₃C and W₄Co₂C, and M₁₂C, such as W₆Co₆C. Compared to WC, W₂C is hard but brittle and prone to fracture. M₆C and M₁₂C are extremely brittle, reducing the strength of the coating layer of the cemented carbide.

### 4-2) Low-carbon phase

The low-carbon phases arise from carbon deficiency or decarburization reaction during the manufacturing process. It consists of at least one of the brittle phases exemplified as M₆C (W₃Co₃C) and M₁₂C (W₆Co₆C).

The low-carbon phases are undesirable because the coating layer of a cemented carbide exhibits reductions in both flexural strength and compressive strength.

### 4-3) Free carbon phase

The free carbon phase refer to graphite formed if the carbon content is excess, or that carbides such as WC are decomposed and precipitated without binding with metallic elements.

The free carbon phases arise from addition of excess carbon or carburization during the manufacturing process and is undesirable because it reduces the flexural strength and hardness of the coating layer of the cemented carbide.

### 4-4) Coarse hard phase

The coarse hard phases refer to large hard phases where "the diameter of the coarse hard phases ≥ 3 × the average diameter (D50) of the hard phases."

The presence of coarse hard phases reduces the flexural strength of the coating layer. In mechanical components coated with cemented carbide layers, these phases act as the initiation points for fracture. Furthermore, the presence of coarse hard phases increases the gaps between hard phases, leading to coarsening of the binder phases. Regions where the binder phases have coarsened exhibit reduced resistance to plastic deformation, resulting in accelerated wear and shortened service life.

### 5) Voids

The presence of voids or cavities is undesirable, for the following reasons: For example, if a mechanical component coated with a cemented carbide layer is a cut-off tool, a sharp edge is required at its cutting edge. If voids exist, they may be exposed on the polished cutting edge of the cut-off tool. Regions with exposed voids cause localized deterioration in cutting performance, leading to poor cutting results.

The area fraction of the voids is defined as follows: 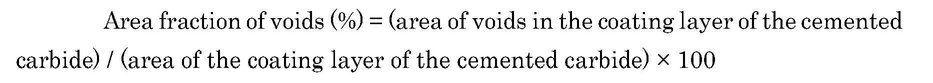 Area fraction of voids (%) = (area of voids in the coating layer of the cemented carbide) / (area of the coating layer of the cemented carbide) × 100

Since the absence of voids in the coating layer of the cemented carbide is preferred, the lower limit of the area fraction of the voids is 0%. The method for measuring the area fraction of voids is described later.

### (2) Composition

The coating layer of the cemented carbide may have any composition satisfying the aforementioned microstructure, without particular restrictions. Examples include the following components:

### 1) WC-based cemented carbide system

Co: 5.0 to 20.0 mass%, Cr: 2.0 mass% or less (inclusive 0.0 mass%), V: 1.0 mass% or less (inclusive 0.0 mass%), C: 5.0 to 7.0 mass%, balance being W and inevitable impurities;
Preferably, Co: 7.0 to 10.0 mass%, Cr: 1.5 mass% or less (inclusive 0.0 mass%), V: 0.5 mass% or less (inclusive 0.0 mass%), C: 5.0 to 7.0 mass%, balance being W and inevitable impurities;
More preferably, Co: 10.0 to 16.0 mass%, Cr: 1.0 mass% or less (inclusive 0.0 mass%), V: 0.5 mass% or less (inclusive 0.0 mass%), C: 5.0 to 7.0 mass%, the balance being W and inevitable impurities.

### 2) WC-TiC-TaC-NbC cemented carbide system

Co: 5.0 to 20.0 mass%, TiC: 25.0 mass% or less (inclusive 0.0 mass%), TaC: 20.0 mass% or less (inclusive 0.0 mass%), NbC: 15.0 mass% or less (inclusive 0.0 mass%), C: 5.0 to 7.0 mass%, the balance being W and inevitable impurities;
Preferably, Co: 7.0 to 10.0 mass%, TiC: 25.0 mass% or less (inclusive 0.0 mass%), TaC: 10.0 mass% or less (inclusive 0.0 mass%), NbC: 10.0 mass% or less (inclusive 0.0 mass%), C: 5.0 to 7.0 mass%, the balance being W and inevitable impurities;
More preferably, Co: 10.0 to 16.0 mass%, TiC: 20.0 mass% or less (inclusive 0.0 mass%), TaC: 10.0 mass% or less (inclusive 0.0 mass%), NbC: 10.0 mass% or less (inclusive 0.0 mass%), C: 5.0 to 7.0 mass%, the balance being W and inevitable impurities.

### (3) Vickers hardness

The coating layer of the cemented carbide preferably has a Vickers hardness of 1200 HV or higher. A Vickers hardness below 1200 HV causes the coating layer of the cemented carbide to exhibit poor wear resistance and to be prone to wear. The Vickers hardness may have any upper limit. In one exemplary method described later of manufacturing the hard ally, the upper limit is approximately 1800 HV. The Vickers hardness is more preferably in the range of 1300 to 1800 HV, even more preferably in the range of 1400 to 1700 HV.

The Vickers hardness is measured under a load of 294 N in accordance with the method specified in ISO 6507 or ASTM E385.

### (4) Identification of each phase and measurement of its area fraction

The binder phases, secondary hard phases, and hard phases are identified, and then the area fractions of these phases are measured, as follows:

### 1) Observation by EDS and EBSD

An arbitrary cross-section or surface of the cemented carbide coating layer is polished to remove fine irregularities and create a smooth surface, to avoid obstruction to measurements with a backscattered electron diffractometer (EBSD). An observation field is established on the smoothed surface for examination. The size and number of observation fields should be appropriately determined depending on the specifications of the EBSD. Multiple observation fields (e.g., five or more) are set at appropriate positions, where one observation field is, for example, 24 µm (vertical) by 72 µm (horizontal).

The samples are then observed with a field emission scanning electron microscope (SEM) equipped with an energy-dispersive X-ray spectrometer (EDS) and an EBSD system (OIM Data Collection, AMETEK). Observation conditions should be determined based on the specifications of the systems used. In the case of use of the exemplified measuring system, observations are performed at an acceleration voltage of 20 kV, to simultaneously acquire EBSD patterns and EDS data. The working distance (distance between the surface of the objective lens and the sample) is 15 mm, the count rate of the measurement is 41,000 cps, and the interval between measurements is 50 nm.

Since observation points (pixels) are present discretely, the region (preferably a regular hexagon) extending until the midpoint between adjacent observation points is represented by the result of the measurement at that point. Among these observation points, if adjacent points have an azimuth difference of 5 degrees or more, the region extending until the midpoint is defined as a crystal grain. Observation points that have an azimuth difference of 5 degrees or more with all adjacent observation points, or observation points that is present alone without adjacent observation points, are not regarded as crystal grains. Only two or more observation points connected each other are identified as crystal grains.

### 2) Identification of each crystal grain

The observed data is read with, for example, AMETEK's OIM Analysis ver. 7.3.1. For each crystal grain, the EDS count values obtained from each observation point within the crystal grain corresponding to each element are averaged to yield the EDS observed values for each element in that crystal grain. The composition of each crystal grain is then derived from the resulting observed values. The detailed procedure is as follows:

The average EDS count values for all elements, W, Co, Ni, Fe, Cr, V, Ta, Ti, Nb, and others are calculated over the entire observation field. The EDS count values for each element in each pixel within each grain are then averaged to determine the composition of each grain.

The hard phase is considered an aggregate of crystalline grains with an hcp crystal structure, primarily composed of W. The binder phase is considered an aggregate of crystalline grains with either an fcc or hcp crystal structure, primarily composed of Co, Ni, or Fe. The secondary hard phase is considered an aggregate of crystalline grains with an fcc crystal structure, primarily composed of Cr, V, Ta, Ti, and Nb. Crystal grains not classified as the hard phase, bonding phase, or secondary hard phase are considered abnormal phases.

### 3) Measurement of size of hard phase

To identify coarse hard grains, the diameter (equivalent circle diameter) of each hard phase is measured and the average diameter (D50) is calculated. As described above, hard phases with an average diameter at least three times the average diameter (D50) is identified as coarse hard phases, and the area fraction occupied by these coarse hard phases is calculated.

The calculated area fraction is added to the area fraction of the abnormal phase and the sum is subtracted from the area fraction of the hard phases.

For calculation of the average diameter, it is preferable to measure at least 300 crystal grains of the hard phases to precisely determine the average diameter.

### (5) Measurement of area fraction of Voids

Voids are assumed to be uniformly distributed within the hard coating alloy layer and measured as follows: A sample piece is cut from the coating layer of the cemented carbide and mirror-polished. An appropriate observation field of 430 µm by 600 µm is determined on the polished sample piece. The sample is subjected to image observation and a binarization process of the observed image to distinguish void areas from non-void areas.

In detail, the image is displayed in 256 grayscale levels, with white corresponding to 0 and black to 255. The lower limit is set to 0, and the upper limit is set to half the grayscale level that appears most frequently in the observed image. A threshold is then set by Otsu's binarization process. The areas that regarded as white are considered voids, and the area fraction of these white areas is measured.

This method demonstrates that the area fraction of voids is measured independently of the area fractions of the hard phases, binder phases, and other phases constituting the coating layer of the cemented carbide.

### (6) Measurement of Average Content of Each Component

The content of each component is measured with an electron microanalyzer. A sample for analysis is cut from the coating layer of the cemented carbide alloy. Three observation fields of view, each at least 96µm by 128µm in size, are set on its polished surface (smoothed by removing minute irregularities to ensure no obstruction to characteristic X-ray analysis with the electron microanalyzer). The contained components and their quantities are measured based on characteristic X-rays, and the average value of the observed results is calculated to determine the content of each component.

### 2. Mechanical Component

The mechanical component including a coating layer of a cemented carbide will now be described.

### (1) Type and material of mechanical Component

The mechanical component including the coating layer of the cemented carbide may have any shape appropriate for their application without particular restrictions. Examples of the shape of the mechanical component include those of cut-off tools (e.g., die cutters), cutting tools (e.g., end mills), and tools of coating devices (e.g., slot dies).

The mechanical component may be composed of any material suitable for the application without particular restrictions. Examples of such material include carbon steel, low-alloy steel, stainless steel, and WC cemented carbide.

### (2) Surface Layer

A coating layer of a cemented carbide may be formed directly on the surface of the mechanical component. Alternatively, a surface layer consisting of one or more sublayers may be provided on the mechanical component, and then a coating layer of a cemented carbide may be formed on the surface layer. The surface layer may have any composition without particular restrictions: Examples include NCF600, NCF718, and DCoCrC, as represented by JIS material symbols.

Since the thickness of the surface layer depends on the application and shape of the mechanical component, the thickness cannot be definitively determined. An exemplary thickness is 1 to 5 mm.

### 3. Production

The following procedure enables the production of a coating layer of a cemented carbide and a mechanical component including the coating layer of the cemented carbide.

### (1) Method of manufacturing filler metal of rod-shaped cemented carbide

### 1) Raw powder for coating layer of cemented carbide

Raw powder for the filler metal corresponding to the composition of the coating layer of the cemented carbide is prepared.

Examples of raw powder include WC powder, Cr₃C₂ powder, VC powder, Co powder, TiC powder, TaC powder, NbC powder, TaNbC powder, TiN powder, and NbN powder.

Preferable raw material powders to be used are those with an average diameter (Fisher size) within a specified range. For example, the average diameter (Fisher size) is 0.5 to 1.5 µm for WC powder, 1.0 to 2.0 µm for Cr₃C₂ powder, 1.0 to 2.0 µm for VC powder, and 1.5 to 2.5 µm for Co powder. The Fisher size is measured with a sub-size sieve.

### 2) Compounding (Mixing)

The raw powders prepared in Procedure 1) above is compounded into a predetermined formulation. Paraffin wax and ethanol are further added. The compound is then pulverized and mixed in a ball mill for a specified time to uniformly disperse the raw powders. Subsequently, the compound is dried under reduced pressure.

### 3) Press Molding

The powder mixture prepared in Procedure (2) is blended with, for example, a thickening agent, and a surfactant, and the mixture was then molded into a green compact that will serve as the base for a sintered rod shape by injection molding.

### 4) Sintering

The green compact prepared in Procedure 3) is heated at a heating rate of 0.3 to 1.0°C/min and is held at 780 to 850°C for 100 to 140 minutes for degreasing. The green compact is then heated under a vacuum of approximately 20 Pa at a heating rate of 2 to 8°C/min then held for 50 to 70 minutes at a temperature of 1350 to 1450°C for sintering. The product is cooled to room temperature at a cooling rate of 5 to 8°C/min under an argon gas atmosphere.

### 5) HIP Treatment

The sintered compact is subjected to HIP treatment involving heating at a heating rate of 5 to 10°C/min to 1250 to 1350°C in an Ar gas atmosphere, holding at a pressure of 85 to 95 MPa for 50 to 70 minutes, and then cooling to room temperature at a cooling rate of 3 to 10°C/min. The sintered compact after HIP-treatment or the filler material has a shape such as a long bar with a cross-sectional diameter of 3 mm and a length of 1500 mm.

### (2) Coating

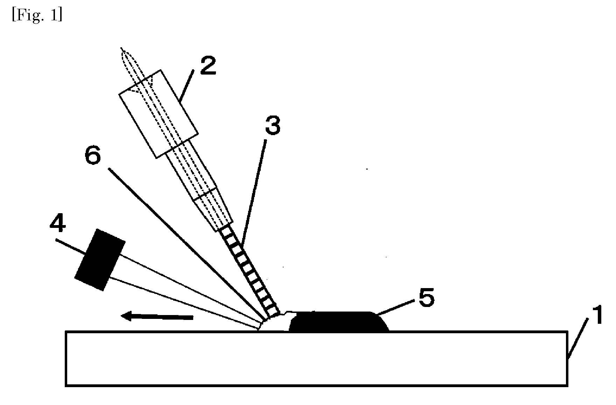

For example, a coating layer of cemented carbide is applied onto a mechanical component with a molding apparatus, a schematic view of which is shown in Fig 1. The portion to be coated of the mechanical component (1) may have any shape without restrictions; for example, its cross-sectional shape may be polygonal, semicircular, or semi-elliptical. The angles described below are defined with respect to the topmost point (apex) of this cross-section as the reference line.

The device shown in Fig. 1 heats a rod-shaped filler material (3) (a filler material composed of a rod-shaped cemented carbide for forming a coating layer of a cemented carbide) to a temperature sufficient to soften the material in a preheater (hot wire torch) (2) on the mechanical component, and feeds the material into a molten pool on the surface of the mechanical component (1) via a feeder (not shown). A molten pool is formed on the mechanical component (1) by heat from a heat source (4) provided separately from the preheater. The filler material remains in a softened state without melting until it is fed into this molten pool. In the molten pool (6), only the bonding phase melts while a hard phase in the filler material (3) composed of a rod shaped cemented carbide does not melt. The cemented carbide then spontaneously cools into a coating layer (5) of the cemented carbide on the surface of the mechanical component (1). The arrows in Fig. 1 indicate the direction of the coating layer to be formed. It should be noted that Fig. 1 lacks the molten portion of the mechanical component and the heat-affected zone (HAZ).

In the device for forming the coating layer of the cemented carbide shown in Fig. 1, the feed angle of the filler material (3), which is a rod-shaped cemented carbide heated to a temperature at which it remains in a softened state without melting until fed into the molten pool, is preferably greater than 4° and less than or equal to 75° (more preferably 5 to 60°, even more preferably 7 to 45°, most preferably 10 to 35°). The incident angle of the heat from the heat source (4) is 3 to 60° (more preferably 4 to 40°, most preferably 5 to 35°), and the feed angle is greater than the incident angle.

The reason the aforementioned feed angle is preferable is as follows: A feed angle exceeding 75° facilitates the interference of the laser spot with the hot wire torch used as the preheater; which phenomenon undesirably causes the hot wire torch to be excessively heated. A feed angle less than 5° causes the laser spot to spread readily to the welding direction, leading to the formation of an excess molten pool. This, in turn, makes it easier for abnormalities such as serpentine weld beads to occur.

In the device for coating the coating layer of the cemented carbide shown in Fig. 1, the preheater (hot wire torch) (2) and the heat source (4) are both provided on the front where the coating layer is to be formed. However, at least one of the preheater (hot wire torch) (2) and the heat source (4) may be provided on the rear where the coating layer has been formed or on a side where the coating layer is not formed.

The softening temperature of the filler material (3) of rod-shaped cemented carbide refers to a surface temperature of 1200 to 2000°C (preferably 1200 to 1700°C) of the filler material composed of the cemented carbide with a rod shape (where the carbide of W is the base alloy) measured by a radiothermometer.

In this manner, softening the filler material of the rod-shaped cemented carbide with the preheater (2) does not melt the hard phase of the filler material of the rod-shaped cemented carbide but melts only the bonding phase to melt into a coating layer, within the molten pool generated by the heat applied to the mechanical component from the heat source (4) provided separately from the preheater.

An exemplary heating means of the preheater (2) is a resistance heating device. The heat source (4) provided separately from the preheater may be any one applying heat. Examples of the heat generator include a laser, an electron beam, a plasma generator, and an arc source discharger.

The filler material (3) composed of the rod-shaped cemented carbide remains in a softened state without melting until it is fed into the molten pool. This phenomenon occurs if the filler material is not exposed to the heat required to form a molten pool; the filler material remains in a softened state even if exposed to this radiated heat; or the filler material remains in a softened state even if heat from the molten pool is transferred to the filler metal through conduction or radiation. In other words, the surface temperature of the filler material composed of the coating layer of the cemented carbide (where the carbide of W is the base alloy) should be within the range of 1200 to 2000°C to keep this state.

The thickness of the coating layer of the cemented carbide varies depending on the application of the mechanical component including the coating layer of the cemented carbide. However, for die cutters used as cut-off tools, it is preferable to form the coating layer such that the final thickness measures approximately 5 mm after the subsequent polishing process.

### (7) Post-Processing (Polishing)

The surface roughness of the coating layer of the cemented carbide should preferably be below a specified value. The permissible surface roughness depends on the application of the mechanical component. For example, for cut-off tools such as die cutters, the preferred roughness Rz is 0.8 µm or less in accordance with ISO 4287-1997, and polishing is performed to achieve this surface roughness. For example, the polishing process may involve rough polishing followed by finish polishing with different grinding stones.

The Vickers hardness (HV) of the coating layer is determined by the grain size of the tungsten carbide and the area fraction of the binder phases. Achieving a coating layer with a specified Vickers hardness requires careful adjustment of the manufacturing conditions. For example, sintering at an appropriate temperature with growth-inhibiting materials for WC carbides such as VC or Cr₃C₂ yields a coating layer with a Vickers hardness of 1200 HV or higher under the conditions of:
a Fischer diameter of the WC powder used as raw material of 0.3 to 0.8 µm and an area fraction of the binder phase of 5 to 30%;
a Fisher diameter of the WC powder used as raw material of 0.3 to 1.0 µm, and an area fraction of the binder phase of 7 to 35%; or
a Fisher diameter of the WC powder used as raw material of 0.3 to 1.5 µm, and an area fraction of the binder phase of 9 to 25%.

The above explanation includes the following features:

### (Appendix 1)

A coating layer of a cemented carbide comprising hard phases and binder phases,
wherein the coating layer further includes abnormal phases in an area fraction of 10.0% or less and voids in an area fraction of 2.0% or less.

### (Appendix 2)

The coating layer of the cemented carbide set forth in Appendix 1, wherein the hard phases have an average equivalent circle diameter (D50) in a range of 0.3 to 10.0 µm.

### (Appendix 3)

The coating layer of the cemented carbide set forth in Appendix 1 or 2, having a Vickers hardness of 1200 HV or higher.

### (Appendix 4)

The coating layer of the cemented carbide set forth in Appendix 1 or 2, having a Vickers hardness in a range of 1300 to 1800 HV.

### (Appendix 5)

The coating layer of the cemented carbide set forth in Appendix 1 or 2, having a Vickers hardness in a range of 1400 to 1700 HV.

### (Appendix 6)

A mechanical component comprising a substrate having a surface, and the coating layer of the cemented carbide set forth in any one of Appendices 1 to 5 on the surface of the substrate.

### (Appendix 7)

A cut-off tool comprising a substrate having a surface, and the coating layer of the cemented carbide set forth in any one of Appendices 1 to 5 on the surface of the substrate.

### (Appendix 8)

A cutting tool comprising a substrate having a surface, and the coating layer of the cemented carbide set forth in any one of Appendices 1 to 5 on the surface of the substrate.

### (Appendix 9)

A coating tool comprising a substrate having a surface, and the coating layer of the cemented carbide set forth in any one of Appendices 1 to 5 on the surface of the substrate.

### (Appendix 10)

The mechanical component set forth in Appendix 6, wherein the substrate includes a surface layer including one or more sublayers.

### (Appendix 11)

The cut-off tool set forth in Appendix 7, wherein the substrate includes a surface layer including one or more sublayers.

### (Appendix 12)

The cutting tool set forth in Appendix 8, wherein the substrate includes a surface layer including one or more sublayers.

### (Appendix 13)

The coating tool set forth in Appendix 9, wherein the substrate includes a surface layer including one or more sublayers.

### Examples

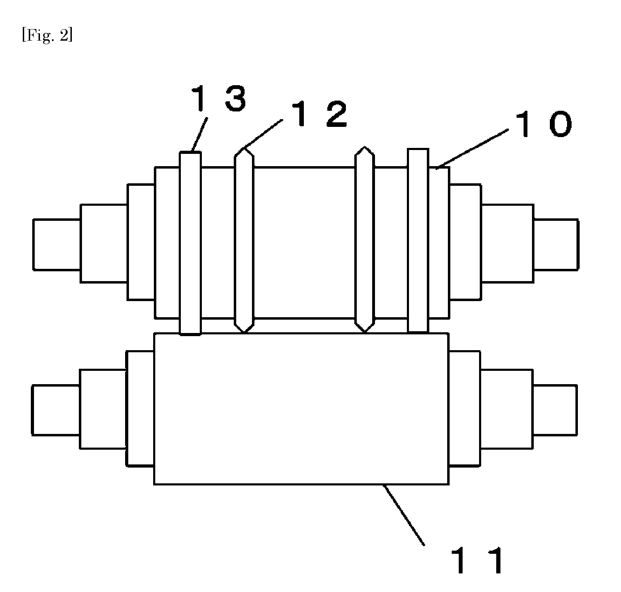

With reference to Fig. 2, an embodiment of a coating layer of a cemented carbide will now be described. The coating layer is formed on the cutting edge (12) and the bearer(13) of a die cutter including a die cut roll (10) and an anvil roll (11). However, the embodiment should not be construed to limit the present invention.

### (1) Raw material powders for the coating layer of cemented carbide (filler material of a cemented carbide with a rod shape)

Three WC powders (average diameters (Fisher size: same applies below) of 1.2 µm, 2.3 µm, and 2.9 µm), Cr₃C₂ powder (average diameter of 1.4 µm), VC powder (average diameterof 1.5 µm), and Co powder (average diameter of 2.1 µm) were prepared. These alloy powders were blended to formulate the composition shown in Table 1.

### (2) Formulation (Mixing)

Paraffin wax and ethanol were then added. The mixture was ground and mixed with a ball mill, followed by vacuum drying. Ten mixed powders as shown in Table 1 were thereby produced.

### (3) Molding

To each of these mixed powders, a thickening agent and a surfactant were added, and the mixture was molded into a green elongated compact with a rod shape by injection molding.

### (4) Sintering

Each elongated green compact was heated to be degreased at a rate of 0.5°C/min to 750°C and held at this temperature for 60 minutes. Subsequently, the compact was sintered at a heating rate of 1.7°C/min to a temperature (shown in Table 1) in the range of 1360 to 1450°C for 60 minutes at this temperature under a vacuum of 20 Pa. The sintered compact was then cooled to room temperature at a rate of 2.9°C/min under an argon gas atmosphere.

### (5) HIP Treatment

Each sintered compact was subjected to HIP treatment involving heating to 1280°C in an Ar gas atmosphere at a heating rate of 4.7°C/min and then holding at 90 MPa pressure for 60 minutes. The sintered compact was then cooled to room temperature at a cooling rate of 1.2°C/min.

Ten sintered compacts after HIP treatment were elongated compacts with a cross-sectional diameter of 5 mm and a length of 1500 mm.

### (6) Coating

Using a molding device shown in Fig. 1, ten rod-shaped cemented carbide filler metals were each used to form a coating layer of a cemented carbide with a thickness of 5 mm on the cutting edge and bearer of each mechanical component, specifically a die cutter blade and a bearer, to yield die cutters with ten different coating layers of cemented carbides (referred to as Examples 1 to 10).

The conditions during the process included a laser output of 3.5 kW, a laser spot size of 2.0 by 6.0 mm, a feed angle of filler material of 60°, a laser incident angle of 30°, a feed rate of filler material of 0.1 m/min, and a hot wire current of 200 A.

The laser, incident on the surface of the mechanical component, forms a molten pool. The filler material, composed of a cemented carbide with a rod shape, was fed in a softened state without melting until it entered the molten pool.

### (7) Polishing

Each product was polished with a polishing wheel into a blade tip thickness of 3 mm. The roughness value (Rz) was 0.8 µm.

Both the die-cutting roll and the anvil roll of the die cutter, manufactured from SCM440, had a roll diameter of 150 mm and a roll width (distance between bearings) of 230 mm.

For comparison, using the same raw powder materials as in Examples except for the average diameter of the WC powder, five die cutters with different cemented carbide coating layers (referred to as Comparative Examples 1 to 5) were produced under variable laser irradiation conditions as described below.

### (1') Raw material powders for the coating layer of cemented carbide

Two WC powders (average diameters of 1.5 µm and 2.9 µm), Cr₃C₂ powder (average diameter of 1.4 µm), VC powder (average diameter of 1.5 µm), and Co powder (average diameter of 2.1 µm) were prepared. These alloy powders were blended such that the coating layers of the cemented carbides each have a composition shown in Table 1.

### (2') Formulation (mixing) and (3') Molding

The same formulation (mixing) and molding process was employed as in Examples.

### (4') Sintering

Each elongated green compact was held to be degreased at 750°C for 60 minutes at a heating rate of 0.5°C/min. The compact was then sintered at a heating rate of 1.7°C/min to a temperature in the range of 1360°C to 1430°C (the sintering temperature listed in Table 1) for 60 minutes under a vacuum of 20 Pa. The sintered compact was then cooled to room temperature at a rate of 2.9°C/min under an argon gas atmosphere.

### (5') HIP treatment

Each sintered compact was subjected to the HIP treatment as in Examples to yield a sintered compact with the same shape as in Examples.

### (6') Coating

Using the molding device schematically shown in Fig. 1, five 5 mm thick coating layers of different cemented carbides were formed on the cutting edges and bearers of the respective die cutters, which are mechanical components, with five filler materials of compacts as in Examples, except for an laser output of 6.5 kW, a laser spot size of 1.0 by 6.0 mm, a feed angle of filler material of 75°, and a laser incident angle of 60°, a hot wire current of 400 A, and a feed rate of filler material of 0.15 m/min where the rod-shaped filler material made of cemented carbide was exposed to the laser to yield five die cutters (referred to as Comparative Examples 1 to 5) each having a coating layer of a different cemented carbide.

### (7') Polishing

Each product was polished as in Examples.

The compositions of the coating layers of cemented carbides in Examples 1 to 10 and Comparative Examples 1 to 5 were measured with the electron microanalyzer described above. The results are shown in Table 2.

Table 3 shows the area fraction of the hard phases, binder phases, abnormal phases, and voids observed by the aforementioned method, for the coating layers of cemented carbides formed on the die cutters. The area fraction of the secondary hard phases was 0% for all Examples and Comparative Examples. The appearance of all the coating layers was normal. Note that in Table 3, the abnormal phases and voids were identified by different methods, i.e., the abnormal phases were identified by EDS and EBSD while voids were identified by image analysis. Since the abnormal phases may contain voids in some cases, the sum of the area fraction of the hard phases, binder phases, abnormal phases, and voids may exceed 100%.

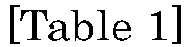

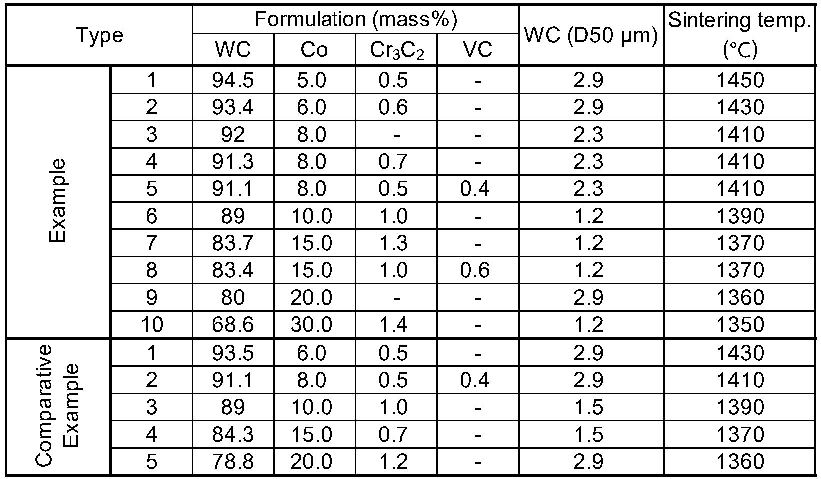

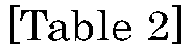

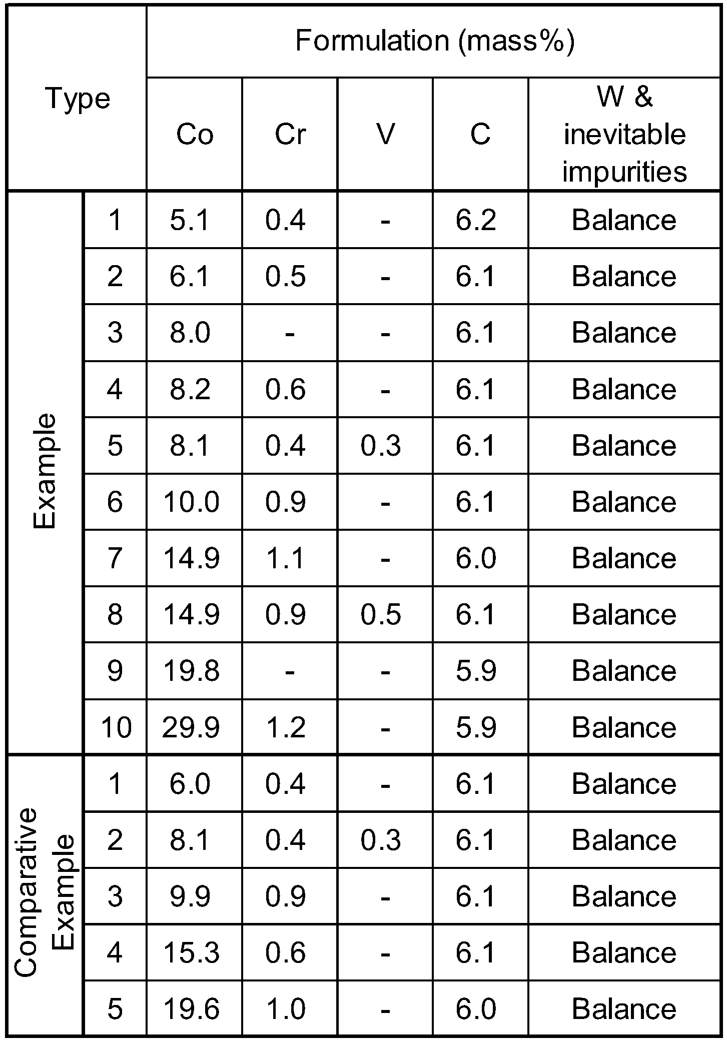

In Tables 1 and 2, symbol "-" indicates that no corresponding element was formulated.

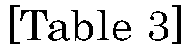

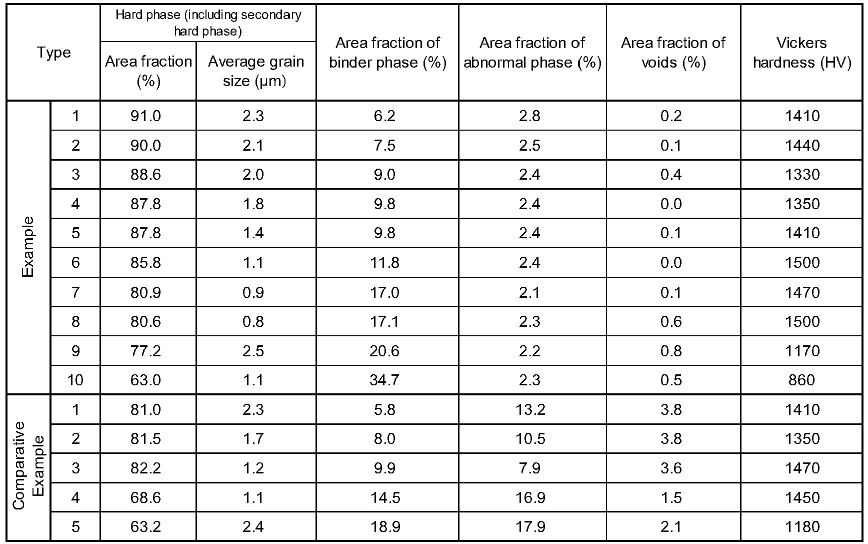

A nonwoven fabric with a 0.2 mm thick was cut with each cutter of Examples 1 to 10 and Comparative Examples 1 to 5, under the following conditions:
Rotation speed: 600 rpm
Pressure: 2940 N
Blade protrusion: 1.5 µm
The state of the blade was checked every 10 minutes (6000 revolutions). When remnants of nonwoven fabric were found, the blade was deemed to have reached the end of its service life and the blade was observed. If a missing section was present, then the sample was classified as a defect; otherwise, it was determined as wear. The results are shown in Table 4.

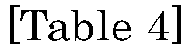

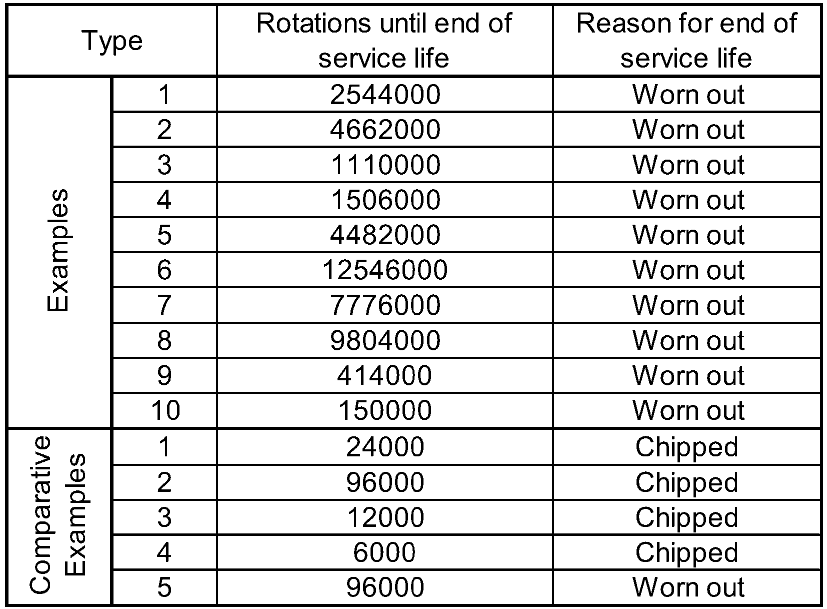

Table 4 demonstrates that Examples 1 to 10 all exhibit a significantly greater number of rotations until failure compared to Comparative Examples 1 to 5, which indicates that the coating layer of cemented carbide enhances the durability of the mechanical component (die cutter). Furthermore, the coating layer, existing only at the cutting edge, allows for a reduction in the use of expensive raw powder containing W and Co.

The embodiments disclosed above are merely illustrative in all respects and are not construed to be limiting. The scope of the present invention is defined by the appended claims, not by the embodiments described above, and it is intended to include all modifications within the gist and scope of the claims and equivalents.

### Reference Signs List

- 1: Mechanical component
- 2: Preheater (hot wire torch)
- 3: Filler material composed of cemented carbide with rod shape
- 4: Heat source installed separately from the preheater
- 5: Coating layer of cemented carbide
- 6: Molten pool
- 10: Die-cut roll
- 11: Anvil roll
- 12: Blade tip
- 13: Bearer

## Claims

1. A coating layer of a cemented carbide comprising hard phases and binder phases,
wherein the coating layer further includes abnormal phases in an area fraction of 10.0% or less and voids in an area fraction of 2.0% or less.

2. The coating layer of the cemented carbide set forth in claim 1, wherein the hard phases have an average equivalent circle diameter (D50) in a range of 0.3 to 10.0 µm.

3. The coating layer of the cemented carbide set forth in claim 1, having a Vickers hardness of 1200 HV or higher.

4. A mechanical component comprising a substrate having a surface, and the coating layer of the cemented carbide set forth in any one of claims 1 to 3 on the surface of the substrate.

5. A cut-off tool comprising a substrate having a surface, and a coating layer of a cemented carbide set forth in any one of claims 1 to 3 on the surface of the substrate.

6. A cutting tool comprising a substrate having a surface, and a coating layer of a cemented carbide set forth in any one of claims 1 to 3 on the surface of the substrate.

7. A coating tool comprising a substrate having a surface, and a coating layer of a cemented carbide set forth in any one of claims 1 to 3 on the surface of the substrate.
